# EUROPÄISCHE PATENTSCHRIFT

(11) **EP 1 552 245 B1**
(45) Veröffentlichungstag und Bekanntmachung des Hinweises auf die Patenterteilung: **01.03.2006**
(21) Anmeldenummer: 03757910.9
(22) Anmeldetag: 02.10.2003
(51) Int. Cl.: G01C 19/56

(54) **VERFAHREN ZUR ERMITTLUNG EINES NULLPUNKTFEHLERS EINES CORIOLISKREISELS UND SOLCH EIN VERFAHREN VERWENDENDER CORIOLISKREISEL**
METHOD FOR DETECTING A ZERO-POINT ERROR OF A CORIOLIS GYROSCOPE AND CORIOLIS GYROSCOPE USING SAID METHOD
PROCEDE POUR DETERMINER UNE DEVIATION RESIDUELLE D'UN GYROSCOPE VIBRANT ET GYROSCOPE VIBRANT METTANT EN OEUVRE UN TEL PROCEDE

(30) Priorität: 18.10.2002 DE 10248736
(43) Veröffentlichungstag der Anmeldung: 13.07.2005
(73) Patentinhaber: LITEF GmbH, 79115 Freiburg (DE)
(72) Erfinder: SCHRÖDER, Werner, 77955 Ettenheim (DE)
(74) Vertreter: Müller, Frithjof E.
(86) Internationale Anmeldenummer: PCT/EP2003/010971
(87) Internationale Veröffentlichungsnummer: WO 2004/038332

(56) Entgegenhaltungen:
- EP-A- 0 711 975
- DE-A- 10 049 462
- DE-A- 19 537 577

## Beschreibung

Die Erfindung betrifft ein Verfahren zur Ermittlung des Nullpunktfehlers bei einem Corioliskreisel.

Corioliskreisel (auch Vibrationskreisel genannt) werden in zunehmendem Umfang zu Navigationszwecken eingesetzt; sie weisen ein Massensystem auf, das in Schwingungen versetzt wird. Diese Schwingung ist in der Regel eine Überlagerung einer Vielzahl von Einzelschwingungen. Diese Einzelschwingungen des Massensystems sind zunächst voneinander unabhängig und lassen sich jeweils abstrakt als "Resonatoren" auffassen. Zum Betrieb eines Vibrationskreisels sind wenigstens zwei Resonatoren erforderlich: einer dieser Resonatoren (erster Resonator) wird künstlich zu Schwingungen angeregt, die im Folgenden als "Anregungsschwingung" bezeichnet wird. Der andere Resonator (zweiter Resonator) wird nur dann zu Schwingungen angeregt, wenn der Vibrationskreisel bewegt/gedreht wird. In diesem Fall treten nämlich Corioliskräfte auf, die den ersten Resonator mit dem zweiten Resonator koppeln, der Anregungsschwingung des ersten Resonators Energie entnehmen und diese auf die Ausleseschwingung des zweiten Resonators übertragen. Die Schwingung des zweiten Resonators wird im Folgenden als "Ausleseschwingung" bezeichnet. Um Bewegungen (insbesondere Drehungen) des Corioliskreisels zu ermitteln, wird die Ausleseschwingung abgegriffen und ein entsprechendes Auslesesignal (z. B. das Ausleseschwingungs-Abgriffsignal) daraufhin untersucht, ob Änderungen in der Amplitude der Ausleseschwingung, die ein Maß für die Drehung des Corioliskreisels darstellen, aufgetreten sind. Corioliskreisel können sowohl als Open-Loop-System als auch als Closed-Loop-System realisiert werden. In einem Closed-Loop-System wird über jeweilige Regelkreise die Amplitude der Ausleseschwingung fortlaufend auf einen festen Wert - vorzugsweise null - rückgestellt.

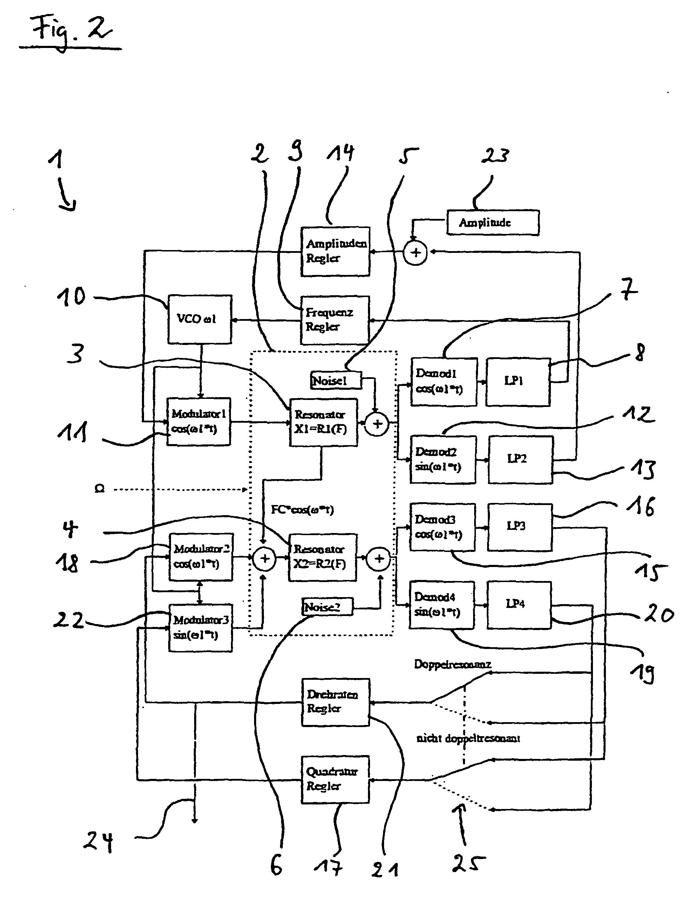

Im Folgenden wird zur weiteren Verdeutlichung der Funktionsweise eines Corioliskreisels unter Bezugnahme auf Figur 2 ein Beispiel eines Corioliskreisels in Closed-Loop-Ausführung beschrieben.

Ein solcher Corioliskreisel 1 weist ein in Schwingungen versetzbares Massensystem 2 auf, das im Folgenden auch als "Resonator" bezeichnet wird. Diese Bezeichnung ist zu unterscheiden von den oben erwähnten "abstrakten" Resonatoren, die Einzelschwingungen des "echten" Resonators darstellen. Wie bereits erwähnt, kann der Resonator 2 als System aus zwei "Resonatoren" (erster Resonator 3 und zweiter Resonator 4) aufgefasst werden. Sowohl der erste als auch der zweite Resonator 3, 4 sind jeweils an einen Kraftgeber (nicht gezeigt) und an ein Abgriffsystem (nicht gezeigt) gekoppelt. Das Rauschen, das durch die Kraftgeber und die Abgriffsysteme erzeugt wird, ist hier durch Noisel (Bezugszeichen 5) und Noise2 (Bezugszeichen 6) schematisch angedeutet.

Der Corioliskreisel 1 weist des Weiteren vier Regelkreise auf:

Ein erster Regelkreis dient zur Regelung der Anregungsschwingung (d.h. der Frequenz des ersten Resonators 3) auf eine feste Frequenz (Resonanzfrequenz). Der erste Regelkreis weist einen ersten Demodulator 7, ein erstes Tiefpassfilter 8, einen Frequenzregler 9, einen VCO ("Voltage Controlled Oscillator") 10 und einen ersten Modulator 11 auf.

Ein zweiter Regelkreis dient zur Regelung der Anregungsschwingung auf eine konstante Amplitude und weist einen zweiten Demodulator 12, ein zweites Tiefpassfilter 13 und einen Amplitudenregler 14 auf.

Ein dritter und ein vierter Regelkreis dienen zur Rückstellung derjenigen Kräfte, die die Ausleseschwingung anregen. Dabei weist der dritte Regelkreis einen dritten Demodulator 15, ein drittes Tiefpassfilter 16, einen Quadraturregler 17 und einen zweiten Modulator 18 auf. Der vierte Regelkreis enthält einen vierten Demodulator 19, ein viertes Tiefpassfilter 20. einen Drehratenregler 21 und einen dritten Modulator 22.

Der erste Resonator 3 wird mit dessen Resonanzfrequenz ω1 angeregt. Die resultierende Anregungsschwingung wird abgegriffen, mittels des ersten Demodulators 7 in Phase demoduliert, und ein demoduliertes Signalanteil wird dem ersten Tiefpassfilter 8 zugeführt, der daraus die Summenfrequenzen entfernt. Das abgegriffene Signal wird im Folgenden auch als Anregungsschwingungs-Abgriffsignal bezeichnet. Ein Ausgangssignal des ersten Tiefpassfilters 8 beaufschlagt einen Frequenzregler 9, der in Abhängigkeit des ihm zugeführten Signals den VCO 10 so regelt, dass die In-Phase-Komponente im Wesentlichen zu Null wird. Dazu gibt der VCO 10 ein Signal an den ersten Modulator 11, der seinerseits einen Kraftgeber so steuert, dass der erste Resonator 3 mit einer Anregungskraft beaufschlagt wird. Ist die In-Phase-Komponente Null, so schwingt der erste Resonator 3 auf seiner Resonanzfrequenz ω1. Es sei erwähnt, dass sämtliche Modulatoren und Demodulatoren auf Basis dieser Resonanzfrequenz ω1 betrieben werden.

Das Anregungsschwingungs-Abgriffsignal wird des Weiteren dem zweiten Regelkreis zugeführt und durch den zweiten Demodulator 12 demoduliert, dessen Ausgabe das zweite Tiefpassfilter 13 passiert, dessen Ausgangssignal wiederum dem Amplitudenregler 14 zugeführt wird. In Abhängigkeit dieses Signals und eines Soll-Amplitudengebers 23 regelt der Amplitudenregler 14 den ersten Modulator 11 so, dass der erste Resonator 3 mit einer konstanten Amplitude schwingt (d.h. die Anregungsschwingung weist eine konstante Amplitude auf).

Wie bereits erwähnt wurde, treten bei Bewegung/Drehungen des Corioliskreisels 1 Corioliskräfte - in der Zeichnung durch den Term FC·cos(ω1·t) angedeutet - auf, die den ersten Resonator 3 mit dem zweiten Resonator 4 koppeln und damit den zweiten Resonator 4 zum Schwingen anregen. Eine resultierende Ausleseschwingung der Frequenz ω2 wird abgegriffen, sodass ein entsprechendes Ausleseschwingungs-Abgriffsignal (Auslesesignal) sowohl dem dritten als auch dem vierten Regelkreis zugeführt wird. Im dritten Regelkreis wird dieses Signal durch den dritten Demodulator 15 demoduliert. Summenfrequenzen durch das dritte Tiefpassfilter 16 entfernt und das tiefpassgefilterte Signal dem Quadraturregler 17 zugeführt, dessen Ausgangssignal den dritten Modulator 22 so beaufschlagt, dass entsprechende Quadraturanteile der Ausleseschwingung rückgestellt werden. Analog hierzu wird im vierten Regelkreis das Ausleseschwingungs-Abgriffsignal durch den vierten Demodulator 19 demoduliert, durchläuft das vierte Tiefpassfilter 20, und ein entsprechend tiefpassgefiltertes Signal beaufschlagt einerseits den Drehratenregler 21, dessen Ausgangssignal proportional zur momentanen Drehrate ist und als Drehraten-Messergebnis auf einen Drehratenausgang 24 gegeben wird, und andererseits den zweiten Modulator 18, der entsprechende Drehratenanteile der Ausleseschwingung rückstellt.

Ein Corioliskreisel 1 wie oben beschrieben kann sowohl doppelresonant als auch nichtdoppelresonant betrieben werden. Wird der Corioliskreisel 1 doppelresonant betrieben, so ist die Frequenz ω2 der Ausleseschwingung annähernd gleich der Frequenz ω1 der Anregungsschwingung, wohingegen im nichtdoppelresonanten Fall die Frequenz ω2 der Ausleseschwingung verschieden von der Frequenz ω1 der Anregungsschwingung ist. Im Fall der Doppelresonanz beinhaltet das Ausgangssignal des vierten Tiefpassfilters 20 entsprechende Information über die Drehrate, im nichtdoppelresonanten Fall dagegen das Ausgangssignal des dritten Tiefpassfilters 16. Um zwischen den unterschiedlichen Betriebsarten doppelresonant/nichtdopelresonant umzuschalten, ist ein Doppelschalter 25 vorgesehen, der die Ausgänge des dritten und vierten Tiefpassfilters 16. 20 wahlweise mit dem Drehratenregler 21 und dem Quadraturregler 17 verbindet.

Aufgrund unvermeidbarer Fertigungstoleranzen lässt es sich nicht vermeiden, dass das Kraftgebersystem, das den ersten Resonator (Anregungsschwingung) anregt, auch den zweiten Resonator (Ausleseschwingung) leicht anregt. Das Ausleseschwingungs-Abgriffsignal setzt sich also aus einem Teil, der durch Corioliskräfte hervorgerufen wird, und einem Teil, der unerwünscht durch Fertigungstoleranzen hervorgerufen wird, zusammen. Der unerwünschte Teil verursacht einen Nullpunktfehler des Corioliskreisels, dessen Große jedoch nicht bekannt ist, da beim Abgreifen des Ausleseschwingungs-Abgriffsignals nicht zwischen diesen beiden Teilen differenziert werden kann.

Die EP-A-0 711 975 beschreibt ein Verfahren und eine Vorrichtung zur Einstellung des Offsets (Nullpunkt) eines Corioliskreisels durch Beeinflussung des Ausgangssignals. Aus der DE-A-100 49 462 ist ein Nullpunktabgleich eines mikromechanischen Bauelements durch Anlegen eines elektrischen Potentials an die Erfassungseinrichtung des Sensors bekannt. Die DE-A-195 37 577 offenbart ein Verfahren zur Eigenkalibrierung der Nullabweichung eines Beschleunigungssensors.

Die der Erfindung zugrunde liegende Aufgabe ist es, ein Verfahren bereit zu stellen, mit dem der oben beschriebene Nullpunktfehler bestimmt werden kann.

Diese Aufgabe wird durch das Verfahren gemäß den Merkmalen des Patentanspruchs 1 gelöst. Ferner stellt die Erfindung einen Corioliskreisel gemäß Patentanspruch 7 bereit. Vorteilhafte Ausgestaltungen und Weiterbildungen des Erfindungsgedankens finden sich in jeweiligen abhängigen Ansprüchen.

Erfindungsgemäß wird bei einem Verfahren zur Ermittlung eines Nullpunktfehlers eines Corioliskreisels der Resonator des Corioliskreisels durch eine Störkraft so beaufschlagt, dass im Wesentlichen eine Änderung der Anregungsschwingung des Resonators bewirkt wird, wobei eine Änderung der Ausleseschwingung des Resonators durch eine Teilkomponente der Störkraft als Maß für den Nullpunktfehler aus einem die Ausleseschwingung des Resonators repräsentierenden Auslesesignal extrahiert wird.

Unter "Resonator" wird hierbei das gesamte in Schwingung versetzbare Massensystem des Corioliskreisels verstanden, also mit Bezug auf Fig. 2 der mit Bezugsziffer 2 gekennzeichnete Teil des Corioliskreisels.

Eine der Erfindung zugrunde liegende wesentliche Erkenntnis ist, dass eine künstliche Änderung der Anregungsschwingung durch Beaufschlagen des Resonators mit entsprechenden Störkräften im Ausleseschwingungs-Abgriffsignal beobachtbar ist: Die Änderung (Modulation) der Anregungsschwingung bewirkt aufgrund der Fertigungstoleranzen des Corioliskreisels auch eine Änderung der Ausleseschwingung. Mit anderen Worten: Die Störkraft beaufschlagt im Wesentlichen den ersten Resonator, eine Teilkomponente dieser Störkraft beaufschlagt jedoch auch den zweiten Resonator. Die "Durchschlagsstärke" einer derartigen Störung auf das Ausleseschwingungs-Abgriffsignal ist also ein Maß für den Nullpunktfehler ("Bias") des Corioliskreisels. Ermittelt man also die Stärke des in dem Auslesesignal enthaltenen Störanteils und vergleicht man diesen mit der Stärke der Störkraft (Änderung der Anregungsschwingung), so lässt sich daraus der Nullpunktfehler ableiten. Ein dem Störanteil proportionales Störanteilsignal kann dann direkt zur Kompensation des Nullpunktfehlers verwendet werden.

Vorzugsweise werden die Störkräfte durch Störsignale erzeugt, die entsprechenden Kraftgebern zugeführt werden bzw. auf Signale, die den Kraftgebern zugeführt werden, aufaddiert werden. Beispielsweise kann, um eine Störkraft zu erzeugen, ein Störsignal auf jeweilige Regelsignale zur Regelung der Anregungsschwingung aufaddiert werden.

Vorzugsweise ist das Störsignal ein Wechselsignal, beispielsweise eine Überlagerung von Sinus- bzw. Kosinussignalen. Ein derartiges Wechselsignal erzeugt über entsprechende Kraftgeber eine Wechselkraft, die die Anregungsschwingung in ihrer Amplitude moduliert. Das Wechselsignal weist in der Regel eine feste Störfrequenz auf, womit der Störanteil des Ausleseschwingungs-Abgriffsignals durch einen entsprechenden Demodulationsprozess, der bei besagter Störfrequenz erfolgt, ermittelt werden kann.

Die Störfrequenz des Störsignals/der Störkraft weist vorzugsweise eine Periode auf, die wesentlich kleiner als eine Zeitkonstante der Anregungsschwingung, jedoch in der Größenordnung oder größer als eine Zeitkonstante des Corioliskreisels ist. Eine Alternative ist, anstelle eines Wechselsignals bandbegrentztes Rauschen als Störsignal zu verwenden. In diesem Fall erfolgt die Demodulation durch Korrelation des Rauschsignals mit dem Signal, das den Störanteil enthält (z. B. das Ausleseschwingungs-Abgriffsignal).

Das oben beschriebene Verfahren kann sowohl auf einen Open-Loop- als auch auf einen Closed-Loop-Corioliskreisel angewandt werden. Im letzteren Fall lässt sich eine Kompensation des Nullpunktfehlers auf folgende Art und Weise erreichen: Es wird eine Linearkombination aus einem geregelten Teil eines Wechselsignals, das die Anregungsschwingung erzeugt, vorzugsweise einschließlich des Störsignals, und einem Wechselsignal, das eine Rückstellung der Ausleseschwingung bewirkt, gebildet und auf einen Drehratenregelkreis/Quadraturregelkreis des Corioliskreisels gegeben. Der geregelte Teil wird hierbei so geregelt, dass die aus dem Auslesesignal ermittelte Änderung der Ausleseschwingung durch die Modulation (d. h. der Störanteil) möglichst klein wird.

Der Störanteil kann beispielsweise direkt aus dem Aulseschwingungs-Abgriffsignal ermittelt werden. Der Begriff "Auslesesignal" beinhaltet dieses Signal sowie das Signal, das an einem Quadraturregler eines Quadraturregelkreises anliegt oder von diesem ausgegeben wird, bzw. das Signal, das an einem Drehratenregler eines Drehratenregelkreises anliegt oder von diesem ausgegeben wird.

Die Erfindung stellt weiterhin einen Corioliskreisel bereit, der gekennzeichnet ist durch eine Einrichtung zur Bestimmung des Nullpunktfehlers des Corioliskreisels. Die Einrichtung weist auf:
- eine Störeinheit, die den Resonator des Corioliskreisels mit einer Störkraft so beaufschlagt, dass die Anregungsschwingung des Resonators moduliert wird.
- eine Störsignal-Detektiereinheit, die einen Störanteil, der in einem die Ausleseschwingung repräsentierenden Auslesesignal enthalten ist und durch eine Teilkomponente der Störkraft erzeugt wurde, als Maß für den Nullpunktfehler ermittelt.

Wenn die Störkraft durch eine Wechselkraft mit einer bestimmten Störfrequenz gegeben ist, weist die Störsignal-Detektiereinheit eine Demodulationseinheit auf, mit der das Auslesesignal einem Demodulationsprozess (synchrone Demodulation mit der Störfrequenz) unterzogen wird. Auf diese Weise wird aus dem Auslesesignal der Störanteil ermittelt. Alternativ kann bandbegrenztes Rauschen als Störsignal Verwendung finden.

Vorzugsweise ist der Corioliskreisel rückstellend, weist also einen Drehratenregelkreis und einen Quadraturregelkreis auf. Im Falle eines rückstellenden Corioliskreisels ist zur Kompensation des Nullpunktfehlers vorteilhafterweise eine Regeleinheit vorgesehen. Die Regeleinheit erzeugt eine Linearkombination aus einem geregelten Teil eines Wechselsignals, das die Anregungsschwingung erzeugt (vorzugsweise einschließlich des Störsignals), und einem Wechselsignal, das eine Rückstellung der Ausleseschwingung bewirkt, und gibt dieses zusammengesetzte Signal auf den Drehratenregelkreis/Quadraturregelkreis des Corioliskreisels. Die Linearkombination der Signale wird durch die Regeleinheit hierbei so geregelt, dass der aus dem Auslesesignal ermittelte Störanteil der Ausleseschwingung möglichst klein wird. Damit ist der Nullpunktfehler des Corioliskreisels kompensiert.

Die Störsignal-Detektiereinheit ermittelt den Störanteil vorzugsweise aus einem Signal, das von einem Drehratenregler des Drehratenregelkreises ausgegeben wird, wobei in diesem Beispiel die Regeleinheit die Linearkombination der Signale auf ein Ausgangssignal des Drehratenreglers aufaddiert.

Im Folgenden wird unter Bezugnahme auf die begleitenden Figuren die Erfindung in beispielsweiser Ausführungsform näher erläutert. Es zeigen:
- **Figur 1**: den schematischen Aufbau eines Corioliskreisels, der auf dem erfindungsgemäßen Verfahren basiert;
- **Figur 2**: den schematischen Aufbau eines herkömmlichen Corioliskreisels:
- **Figur 3**: eine Skizze zur Erläuterung des Zusammenspiels von Resonator.
Kraftgebersystem und Abgriffsystem in einem Coriollskreisel.
- **Figuren 4a bis 4d**: eine Skizze zur Erläuterung der Kräfte und Schwingungs- amplituden für einen Corioliskreisel in Doppelresonanz:
- **Figuren 5a bis 5d**: eine Skizze zur Erläuterung der Kräfte und Schwingungsamplituden für eine Corioliskreisel nahe Doppelresonanz;
- **Figuren 6a bis 6d**: eine Skizze zur Erläuterung des erfindungsgemäßen Verfahrens.

In den Zeichnungen sind Teile bzw. Einrichtungen, die denen aus Figuren entsprechen, mit den selben Bezugszeichen gekennzeichnet und werden nicht nochmals erläutert.

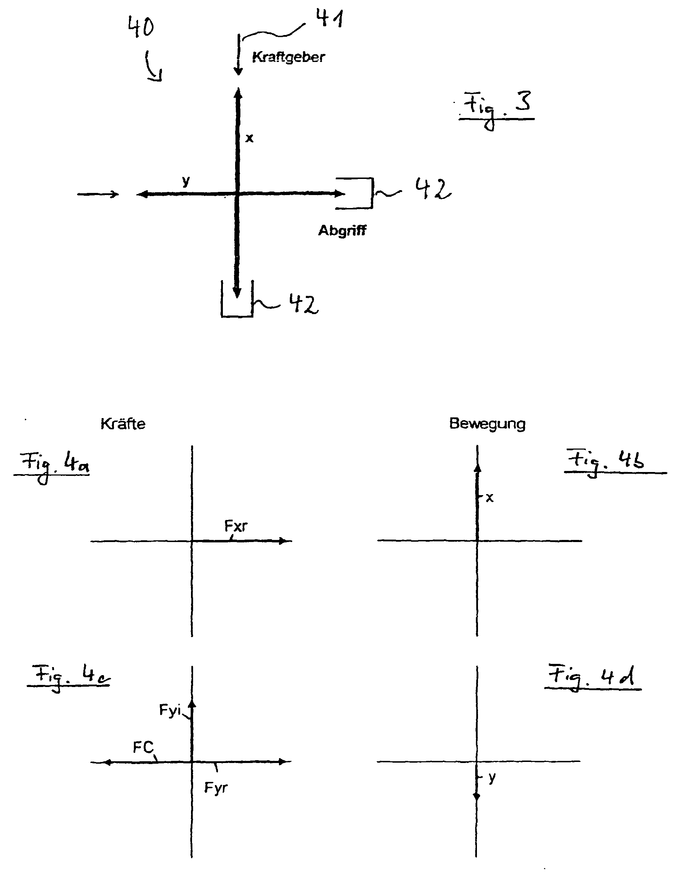

Zunächst soll die generelle Funktionsweise eines Corioliskreisels anhand der Figuren 3 bis 5 in Form einer Zeigerdiagrammdarstellung (Gauß'sche Zahlenebene) nochmals erläutert werden.

Figur 3 zeigt schematisch einen Corioliskreisel, genauer gesagt ein System 40 aus Resonator (nicht gezeigt). Kraftgebersystem 41 und Abgriffsystem 42 in einem Corioliskreisel. Weiterhin sind mögliche Schwingungen x (Anregung) und y (Auslesung) angedeutet, die bei Drehungen senkrecht zur Zeichenebene durch Corioliskräfte miteinander verkoppelt werden. Die x-Schwingung (komplex) wird durch die Wechselkraft mit der komplexen Amplitude Fx (hier nur Realteil Fxr) angeregt. Die y-Schwingung (komplex) wird durch die Wechselkraft der komplexen Amplitude Fy mit dem Realteil Fyr und dem Imaginärteil Fyi rückgestellt. Die Drehzeiger exp(i*ω*t) sind jeweils weggelassen.

Figuren 4a bis 4d zeigen die komplexen Kräfte und komplexen Schwingungsamplituden für einen idealen Corioliskreisel mit gleicher Resonanzfrequenz von x- und y-Schwingung (Doppelresonanz). Die Kraft Fxr und die Anregungsfrequenz des Kreisels werden so geregelt, dass sich eine rein imaginäre, konstante x-Schwingung einstellt. Dies wird erreicht durch einen Amplitudenregler 14. der den Betrag der x-Schwingung regelt, sowie einen Phasenregler 10, der die Phase der x-Schwingung regelt. Die Betriebsfrequenz ω1 wird so geregelt, dass die x-Schwingung rein imaginär wird, d.h. der Realteil der x-Schwingung auf null geregelt wird.

Die Corioliskraft bei Drehung. FC. ist nun rein reell, da die Corioliskraft der Geschwindigkeit der x-Schwingung proportional ist. Haben beide Schwingungen die gleiche Resonanzfrequenz, so gestaltet sich die y-Schwingung, verursacht durch die Kraft FC. wie in Fig. 4d dargestellt. Sind die Resonanzfrequenzen von x-und y-Schwingung leicht verschieden, so liegen komplexe Kräfte und komplexe Schwingungsamplituden vor, die sich wie in Figuren 5a bis 5d gezeigt gestalten. Insbesondere liegt eine durch FC angeregte y-Schwingung wie in Figur 5d gezeigt vor.

Bei Vorliegen von Doppelresonanz ist der Realteil des y-Abgriffsignals null, bei Nichtvorliegen hingegen nicht. In beiden Fällen wird bei rückgestellten Kreiseln die Corioliskraft FC durch einen Regler für Fyr, der FC kompensiert, genullt. Bei Corioliskreiseln, die doppelresonant betrieben werden, wird der Imaginärteil von y mittels Fyr genullt, der Realteil von y wird mittels Fyi genullt. Die Bandbreite der beiden Regelungen beträgt etwa 100 Hz.

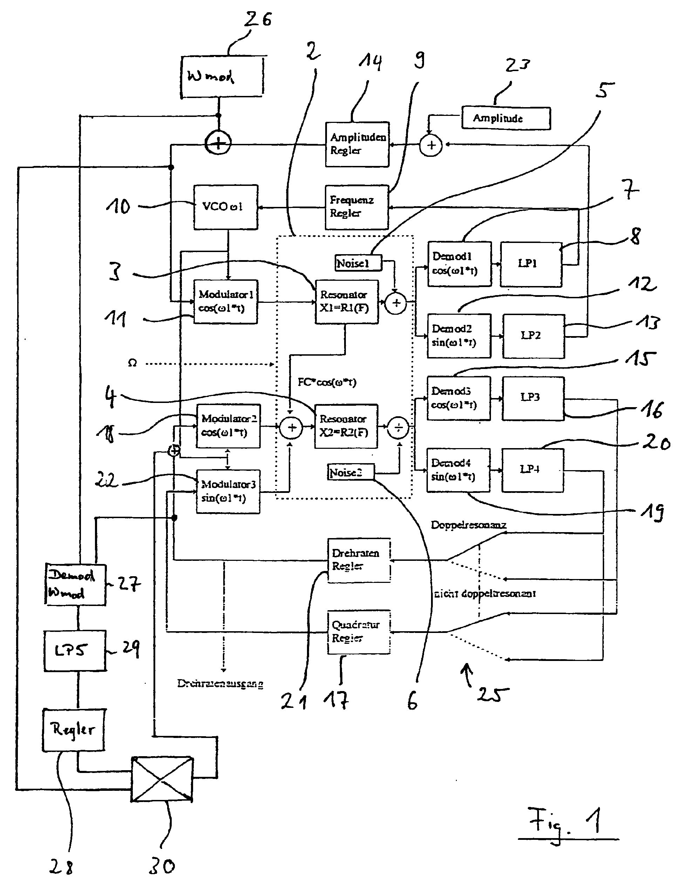

Nun wird unter Bezugnahme auf Figur 1 das erfindungsgemäße Verfahren in beispielsweiser Ausführungsform näher erläutert.

Ein rückstellender Corioliskreisel 1' ist zusätzlich mit einer Störeinheit 26, einer Demodulationseinheit 27, einer Regeleinheit 28, einem fünften Tiefpassfilter 29 und einem Multiplikator 30 versehen.

Die Störeinheit 26 erzeugt ein Wechselsignal mit einer Frequenz ωmod, das auf das Ausgabesignal des Amplitudenreglers 14 aufaddiert wird. Alternativ kann anstelle des Wechselsignals auch bandbegrenztes Rauschen als Störsignal Verwendung finden. Ferner wird dieses Wechselsignal der Demodulationseinheit 27 zugeführt. Das somit erhaltene zusammengesetzte Signal (Ausgabesignal des Amplitudenreglers und Wechselsignal) wird einem (ersten) Modulator 11 zugeführt, dessen entsprechendes Ausgabesignal einen Kraftgeber (nicht gezeigt) und damit den Resonator 2 beaufschlagt. Damit wird der Resonator 2 zusätzlich mit einer Wechselkraft, die dem Wechselsignal entspricht, beaufschlagt. Diese Wechselkraft lässt sich nach "Durchgang" durch den Resonator 2 in Form eines Störanteils des Ausleseschwingungs-Abgriffsignals beobachten. In diesem Beispiel wird, um den Störanteil zu ermitteln, das Signal, das vom Drehratenregler ausgegeben wird, einem Demodulationsprozess unterzogen, der durch die Demodulationseinheit 27 ausgeführt wird und bei der Frequenz ωmod (Störfrequenz) erfolgt. Das somit erhaltene Signal (Störanteil) wird durch das fünfte Tiefpassfilter 29 gefiltert und der Regeleinheit 28 zugeführt. Das der Regeleinheit 28 zugeführte Signal stellt ein Maß für den Nulipunktfehler dar. Die Regeleinheit 28 erzeugt in Abhängigkeit des ihr zugeführten Signals ein Ausgabesignal, das dem Multiplikator 30 zugeführt wird und so beschaffen ist, dass der Störanteil des Ausleseschwingungs-Abgriffsignals möglichst klein geregelt wird. Der Multiplikator 30 multipliziert das zusammengesetzte Signal (Ausgabesignal des Amplitudenreglers und Wechselsignal), das diesem zugeführt wird, mit dem Ausgabesignal der Regeleinheit 28 und erzeugt damit ein Ausgangssignal, das auf das Signal, das vom Drehratenregler ausgegeben wird, aufaddiert wird. Damit wird der Bias des Corioliskreisels zurückgestellt. Das der Demodulationseinheit 27 zugeführte Signal kann alternativ auch das Signal sein, das dem Drehratenregler 21 zugeführt wird bzw. dem Quadraturregler 17 zugeführt/vom Quadraturregler 17 ausgegeben wird. Auch kann das der Demodulationseinheit 27 zugeführte Signal das Ausleseschwingungs-Abgriffsignal selbst sein. Im letzteren Fall muss bei der Demodulation auch die Betriebsfrequenz ω berücksichtigt werden.

Ferner ist es prinzipiell möglich, das Ausgabesignal des Multiplikators 30 an einer beliebigen Stelle in den Drehratenregelkreis einzuspeisen (nicht nur unmittelbar vor dem zweiten Modulator 18), d. h. an einer beliebigen Stelle zwischen dem Abgriff für die Ausleseschwingung und dem dritten Modulator 22. Analoge Überlegungen gelten für den Fall, das Störsignal in den Quadraturregelkreis einzuspeisen.

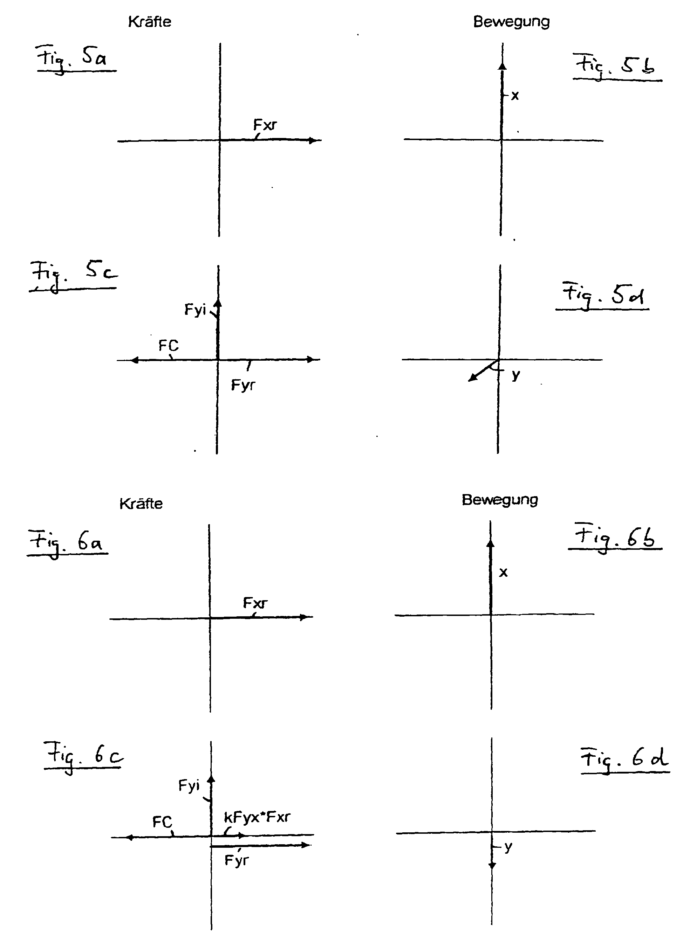

Das eben beschriebene erfindungsgemäße Verfahren lässt sich unter Bezugnahme auf Figuren 6a bis 6d auch wir folgt darstellen:

Die Ausleseschwingung wird aufgrund von Fertigungstoleranzen 1. a. einen kleinen Teil der Anregungskraft Fxr "sehen": kFyx*Fxr. Bei geschlossenem Fyr-Regelkreis wird Fyr dadurch um kFyx*Fyr gegenüber dem korrekten Wert verändert. Es entsteht ein entsprechender Bias, da Fyr ein Maß für die Drehrate ist. Zur Kompensation dieses Fehlers wird nun die Amplitude von Fxr mittels der Störeinheit 26 mittelwertfrei moduliert. Die Modulationsfrequenz oder die Frequenzen des bandbegrenzten Modulationsrauschens sollten so gewählt werden, dass die Anregungsschwingung möglichst wenig gestört wird, der Drehratenregelkreis aber über den Anteil KFyx*Fxr möglichst stark gestört wird. Der Fehlanteil in Fyr, kFyx*Fxr wird nun durch Addition eines geregelten Anteils kFyxcomp*Fxr zu Fyr derart kompensiert, dass die Modulation im Drehratenkanal verschwindet. Hierzu ist kFyxcomp. der von der Reglereinheit 28 ausgegeben wird. (vorzugsweise softwaretechnisch) zu regeln. Das Eingangssignal eines entsprechenden Reglers (Reglereinheit 28) ist das mit der Modulationsfrequenz synchron demodulierte Signal von Fyr. Ist der Regler abgestimmt, so verschwindet das Modulationssignal im Drehratenkanal, ein Sperrfilter für die Modulationsfrequenz ist im Drehratenausgaang daher nicht erforderlich.

## Patentansprüche

1. Verfahren zur Ermittlung des Nullpunktfehlers eines Corioliskreisels (1'), bei dem
- der Resonator (2) des Corioliskreisels (1') durch eine Störkraft so beaufschlagt wird, dass eine Änderung der Anregungsschwingung des Resonators (2) bewirkt wird, und
- eine Änderung der Ausleseschwingung des Resonators (2), die durch eine Teilkomponente der Störkraft erzeugt wird, als Maß für den Nullpunktfehler aus einem die Ausleseschwingung des Resonators (2) repräsentierenden Auslesesignal extrahiert wird.

2. Verfahren nach Anspruch 1, **dadurch gekennzeichnet, dass** die Störkraft eine Wechselkraft ist, die die Anregungsschwingung in ihrer Amplitude moduliert.

3. Verfahren nach Anspruch 2. **dadurch gekennzeichnet, dass** die Störkraft eine Störfrequenz aufweist, deren Periode wesentlich kleiner als eine Zeitkonstante der Anregungsschwingung, jedoch in der Größenordnung oder größer als eine Zeitkonstante des Corioliskreisels ist.

4. Verfahren nach Anspruch 2 oder 3, **dadurch gekennzeichnet, dass** die Änderung der Ausleseschwingung erfasst wird, indem das Auslesesignal einem Demodulationsprozess auf Basis der Störfrequenz unterworfen wird.

5. Verfahren nach Anspruch 1, **dadurch gekennzeichnet, dass** die Störkraft durch ein Störsignal, das bandbegrenztes Rauschen ist, erzeugt wird.

6. Verfahren nach einem der vorstehenden Ansprüche, **dadurch gekennzeichnet, dass** eine Linearkombination aus einem geregelten Teil eines Wechselsignals, das die Anregungsschwingung erzeugt, und einem Wechselsignal, das eine Rückstellung der Ausleseschwingung bewirkt, derart gebildet und auf einen Drehratenregelkreis/Quadraturregelkreis des Corioliskreisels gegeben wird, dass die aus dem Auslesesignal ermittelte Änderung der Ausleseschwingung möglichst klein wird.

7. Corioliskreisel (1'), **gekennzeichnet durch** eine Einrichtung zur Bestimmung des Nullpunktfehlers des Corioliskreisels (1'), mit:
- einer Störeinheit (26), die derart angeordnet ist, dass sie den Resonator (2) des Corioliskreisels (1') mit einer Störkraft so beaufschlagt, dass die Anregungsschwingung des Resonators (2) moduliert wird.
- einer Störsignal-Detektiereinheit (27), die derart angeordnet ist, dass sie einen Störanteil, der in einem die Ausleseschwingung repräsentierenden Auslesesignal enthalten ist und **durch** eine Teilkomponente der Störkraft erzeugt wurde, als Maß für den Nullpunktfehler ermittelt.

8. Corioliskreisel (1') nach Anspruch 7, **gekennzeichnet durch** einen Drehratenregelkreis/Quadraturregelkreis.

9. Corioliskreisel (1') nach Anspruch 8, **gekennzeichnet durch** eine Regeleinheit (28), die derart angeordnet ist, dass sie eine Linearkombination aus einem geregelten Teil eines Wechselsignals, das die Anregungsschwingung erzeugt, und einem Wechselsignal, das eine Rückstellung der Ausleseschwingung bewirkt, bildet und auf den Drehratenregelkreis/Quadraturregelkreis des Corioliskreisels (1') gibt, wobei die Regeleinheit derart angeordnet ist, dass sie die Linearkombination der Signale so regelt, dass der aus dem Auslesesignal ermittelte Störanteil der Ausleseschwingung möglichst klein wird.

10. Corioliskreisel (1') nach Anspruch 9, **dadurch gekennzeichnet, dass** die Störsignal-Detektiereinheit (27) derart angeordnet ist, dass sie den Störanteil aus einem Signal ermittelt, das von einem Drehratenregler (21) des Drehratenregelkreises ausgegeben wird, und die Linearkombination der Signale auf ein Ausgangssignal des Drehratenreglers (21) aufaddiert.

## Claims

1. A method for determining the zero-point error of a Coriolis gyro (1'), wherein
- the resonator (2) of the Coriolis gyro (1) has a disturbance force applied to it such that a change in the stimulation oscillation of the resonator (2) is brought about, and
- a change in the read oscillation of the resonator (2), which is produced by a partial component of the disturbance force, is extracted from a read signal which represents the read oscillation of the resonator (2) as a measure of the zero-point error.

2. The method as claimed in claim 1, **characterized in that** the disturbance force is an alternating force which modulates the amplitude of the stimulation oscillation.

3. The method as claimed in claim 2. **characterized in that** the disturbance force has a disturbance frequency whose period is substantially shorter than the time constant of the stimulation oscillation but is of the same order of magnitude as or greater than the time constant of the Coriolis gyro.

4. The method as claimed in claim 2 or 3, **characterized in that** the change in the read oscillation is detected by subjecting the read signal to a demodulation process on the basis of the disturbance frequency.

5. The method as claimed in claim 1, **characterized in that** the disturbance force is produced by a disturbance signal which is band-limited noise.

6. The method as claimed in one of the preceding claims, **characterized in that** a linear combination is formed of a controlled part of an alternating signal, which produces the stimulation oscillation, and an alternating signal, which results in the read oscillation being reset, and is passed to a rotation rate control loop/quadrature control loop of the Coriolis gyro, in such a way that the change in the read oscillation determined from the read signal becomes as small as possible.

7. A Coriolis gyro (1), **characterized by** a device for determining the zero-point error of the Coriolis gyro (1'), having:
- a disturbance unit (26) which is arranged in such a way that it applies a disturbance force to the resonator (2) of the Coriolis gyro (1') such that the stimulation oscillation of the resonator (2) is modulated,
- a disturbance signal detection unit (27), which is arranged in such a way that it determines a disturbance component which is contained in a read signal which represents the read osoillation and has been produced by a partial component of the disturbance force, as a measure of the zero-point error.

8. The Coriolis gyro (1') as claimed in claim 7, **characterized by** a rotation rate control loop/quadrature control loop.

9. The Coriolis gyro (1') as claimed in claim 8, **characterized by** a control unit (28), which is arranged in such a way that it forms a linear combination of a controlled part of an alternating signal, which produces the stimulation oscillation, and an alternating signal which results in the read oscillation being reset, and passes it to the rotation rate control loop/quadrature control loop of the Coriolis gyro (1'), with the control unit being arranged in such a way that it controls the linear combination of the signals such that the disturbance component, which is determined from the read signal, of the read oscillation becomes as small as possible.

10. The Coriolis gyro (1') as claimed in claim 9, **characterized in that** the disturbance signal detection unit (27) is arranged in such a way that it determines the disturbance component from a signal which is emitted from a rotation rate regulator (21) in the rotation rate control loop, and the linear combination of the signals is added to an output signal from the rotation rate regulator (21).

## Revendications

1. Procédé pour déterminer la dérive de zéro d'un gyroscope vibrant (1'), selon lequel
- le résonateur (2) du gyroscope vibrant (1') est sollicité par une force perturbatrice de telle sorte qu'une variation de l'oscillation d'excitation du résonateur (2) est provoquée,
- une variation de l'oscillation sélectionnée du résonateur (2) qui est générée par une composante partielle de la force perturbatrice est extraite, comme mesure de la dérive de zéro, d'un signal représentant l'oscillation sélectionnée du résonateur (2).

2. Procédé selon la revendication 1, **caractérisé en ce que** la force perturbatrice est une force alternative qui module l'amplitude de l'oscillation d'excitation.

3. Procédé selon la revendication 2, **caractérisé en ce que** la force perturbatrice présente une fréquence perturbatrice dont la période est nettement inférieure à une constante de temps de l'oscillation d'excitation, mais qui est de l'ordre d'une constante de temps du gyroscope vibrant ou supérieure à celle-ci.

4. Procédé selon la revendication 2 ou 3, **caractérisé en ce qu'**on enregistre la variation de l'oscillation sélectionnée en soumettant le signal sélectionné à une opération de démodulation sur la base de la fréquence perturbatrice.

5. Procédé selon la revendication 1, **caractérisé en ce que** la force perturbatrice est générée par un signal perturbateur qui est constitué par un bruit à bande limitée.

6. Procédé selon l'une des revendications précédentes, **caractérisé en ce qu'**une combinaison linéaire d'une partie réglée d'un signal alternatif qui génère l'oscillation d'excitation, et d'un signal alternatif qui provoque un retour à l'état initial de l'oscillation sélectionnée est formée et est transmise à un circuit régulateur de vitesse de rotation/circuit régulateur de quadrature du gyroscope vibrant de telle sorte que la variation de l'oscillation sélectionnée qui est déterminée à partir du signal sélectionné devienne aussi faible que possible.

7. Gyroscope vibrant (1') **caractérisé par** un dispositif pour définir la dérive de zéro du gyroscope vibrant (1'), avec :
- une unité perturbatrice (26) qui est disposée de manière à solliciter le résonateur (2) du gyroscope vibrant (1') avec une force perturbatrice de telle sorte que l'oscillation d'excitation du résonateur (2) soit modulée,
- une unité de détection de signal perturbateur (27) qui est disposée de manière à déterminer comme mesure de la dérive de zéro une partie perturbatrice qui est contenue dans un signal sélectionné représentant l'oscillation sélectionnée et qui a été générée par une composante partielle de la force perturbatrice.

8. Gyroscope vibrant (1') selon la revendication 7, **caractérisé par** un circuit régulateur de vitesse de rotation/circuit régulateur de quadrature.

9. Gyroscope vibrant (1') selon la revendication 8, **caractérisé par** une unité de réglage (28) qui est disposée de manière à former une combinaison linéaire d'une partie réglée d'un signal alternatif qui génère l'oscillation d'excitation, et d'un signal alternatif qui provoque un retour à l'état initial de l'oscillation sélectionnée, et transmet ladite combinaison au circuit régulateur de vitesse de rotation/circuit régulateur de quadrature du gyroscope vibrant (1'), l'unité de réglage étant disposée de manière à régler la combinaison linéaire des signaux pour que la partie perturbatrice de l'oscillation sélectionnée qui est déterminée à partir du signal sélectionné devienne aussi faible que possible.

10. Gyroscope vibrant (1') selon la revendication 9, **caractérisé en ce que** l'unité de détection de signal perturbateur (27) est disposée de manière à déterminer la partie perturbatrice à partir d'un signal qui est émis par un régulateur de vitesse de rotation (21) du circuit régulateur de vitesse de rotation, et à ajouter la combinaison linéaire des signaux à un signal de sortie du régulateur de vitesse de rotation (21).
